# EUROPEAN PATENT SPECIFICATION

(11) **EP 0 452 148 B1**
(45) Date of publication and mention of the grant of the patent: **13.12.1995**
(21) Application number: 91303260.3
(22) Date of filing: 12.04.1991
(51) Int. Cl.: G11B 23/087

(54) **Tape cassette**
Bandkassette
Cassette à bande

(30) Priority: 13.04.1990 JP 39877/90 U
(43) Date of publication of application: 16.10.1991
(73) Proprietor: SONY CORPORATION, Tokyo 141 (JP)
(72) Inventor: Iwahashi, Yuji, c/o Patents Division Sony Co., Shinagawa-ku, Toyko 141 (JP); Abe, Masanori, c/o Patents Division Sony Co., Shinagawa-ku, Toyko 141 (JP)
(74) Representative: Purvis, William Michael Cameron

(56) References cited:
- DE-A- 3 344 474
- US-A- 4 844 377
- US-A- 4 898 338

## Description

The invention relates to a tape cassette, and particularly but not exclusively to a tape cassette for a video tape recorder.

Tapes cassettes are known which protect magnetic tapes contained therein from dust.

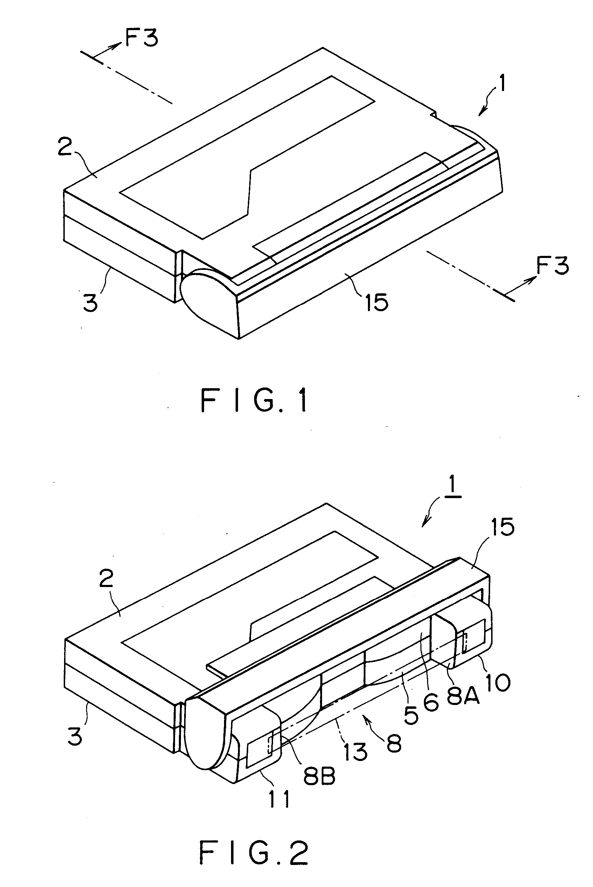

One previously proposed tape cassette 1 is shown in Figures 1 and 2 of the accompanying drawings to comprise a rectangular upper half 2 and lower half 3 which form a cassette housing, in which tape reels having a magnetic tape wrapped around them are accommodated.

The upper half 2 and the lower half 3 have recessed walls 5 and 6 formed so that they are recessed from the front toward the rear, respectively, and a front opening 8 is thereby formed in the front of the tape cassette 1 substantially over the entire width of the cassette.

A pair of tape guides 10 and 11 are formed in respective ends of the recessed walls 5 and 6 and the upper half 2 and lower half 3 conform in shape to each other. A tape 13 which is drawn out from the tape reels is guided by and bridged between the tape guides 10 and 11, and thereby extends across the front opening 8.

A front closure 15 is mounted at the front of each of the upper half 2 and the lower half 3 so that it is vertically pivotable about pivots formed at opposite sides of the upper half 2 and the lower half 3. With this structure, the tape 13 can be exposed by turning the front closure 15 upwardly when the cassette tape 1 is loaded into a video tape recorder, and the tape 13 can be covered at the front thereof by holding the front closure 15 at a downwardly turned position after the tape cassette is ejected from a video tape recorder.

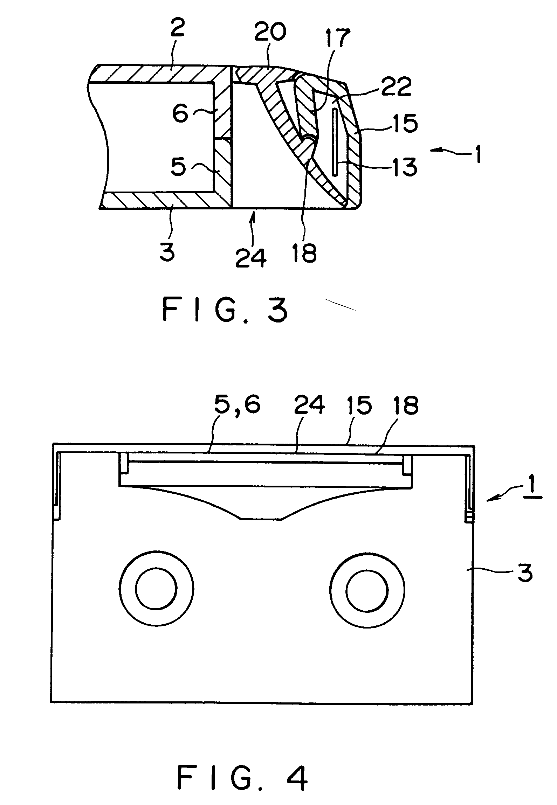

As shown in Figure 3, the front closure 15 is formed with a generally U-shaped cross-section by integrally forming an inner plate 17 with the rear surface of the front closure 15 so as to extend downwardly. A rear closure 18 is pivotally supported by pins formed at opposite ends of the lower end of the inner plate 17.

The rear closure 18 has an integral upper plate 20 and a diagonally forwardly extending plate, extending from a substantially middle portion of the upper plate 20. The rear closure 18 thus surrounds the tape 13 in cooperation with the front closure 15.

Thus, the rear closure 18 and the front closure 15 define a tape chamber 22, in which the tape 13 which extends along the front opening 8 is protected from dust in the state in which the cassette tape 1 is stored.

In this state, the upper plate 20 forms part of the upper surface of the cassette tape 1 to cover a gap formed between the front of the upper half 2 and the front closure 15.

Furthermore, the rear closure 18 is provided so that it is pivotable under the guidance of guide grooves formed in inner surfaces 8A and 8B of the cassette housing forming the front opening 8 when the front closure 15 is turned upwardly, that is to say when the cassette tape 1 is loaded into a video tape recorder, so that the tape 13 which extends across the front opening 8 is exposed.

In this manner, the tape 13 can be exposed or can be protected from dust by turning the front closure 15 appropriately.

To act upon the tape 13 in this kind of tape cassette 1, loading guides are inserted into an area 24 (hereinafter referred to as a mouse area) defined by the rear closure 18, the recessed walls 5 and 6, and the upper plate 20, after the front closure 15 is turned upwardly.

The conventional tape cassette 1 however has a drawback in that the mouse area 24 is narrow due to the diagonal extension of the rear closure 18.

This raises a problem in that if the cassette tape slightly shifts upon insertion of the loading guides, the loading guides can contact the rear closure 18.

Patent Specifications US-A-4 844 377 and DE-A-3 344 474 both disclose tape cassettes wherein an upper portion of a front opening is covered by a wall portion projecting from a cassette housing, an outer closure cover is formed by a curved portion which extends over the tape extending across the front opening and down the front side thereof, and a rear closure is formed by a T-shaped member the bar of which extends from the wall portion to the outer cover and the stem of which is angled and pivotally mounted approximately at its mid point and extends behind the tape to touch the bottom of the outer cover in the closed positions of the outer closure cover and the rear closure.

According to the invention there is provided a tape cassette comprising
a cassette housing having an upper half and a lower half,
tape reels accommodated in the cassette housing,
a tape wrapped around the tape reels,
a front opening at the front of the cassette housing with the tape extending across the front opening,
a front closure which in a closed position closes the front opening and includes a U-shaped cross-section to cover the tape extending across the front opening from the front and above, the U-shaped cross-section comprising an outer portion which covers the whole of the front of the tape and an inner plate which covers an upper part of a rear face of the tape, and
a rear closure pivotably mounted on the inner plate and in a closed position covering the remainder of the rear of the tape extending across the front opening so that the tape extending across the front opening is protected by the front closure and the rear closure,
characterised in that a wall forming an upper surface of the upper half extends over the front opening towards the front closure to cover the upper portion of the front opening, the rear closure is pivotally mounted on pins formed at opposite ends of the inner plate, and extends in the closed position only from the lower edge of the inner plate to the lower edge of the outer portion of the U-shaped cross-section front closure, and
a mouse area is defined by wall surfaces of the cassette housing at the sides of the front opening, the inner plate, the rear closure and the wall forming an upper surface of the upper half.

In such a tape cassette the mouse area can be large compared to convention tape cassettes.

The invention is diagrammatically illustrated by way of example in the accompanying drawings, in which:-
Figures 1 and 2 are perspective views illustrating a tape cassette of conventional kind with a closure member respectively in a closed and in an open position;
Figure 3 is a sectional view taken on line F3-F3 of Figure 1;
Figure 4 is a bottom view of the cassette tape of Figures 1 to 3;
Figure 5 is a perspective view showing a cassette tape according to the invention;
Figure 6 is a sectional view taken on line F6-F6 in Figure 5; and
Figure 7 is a perspective view illustrating the front closure and a rear closure of the tape cassette of Figures 5 and 6.

Preferred embodiments of this invention will be described with reference to the accompanying drawings:

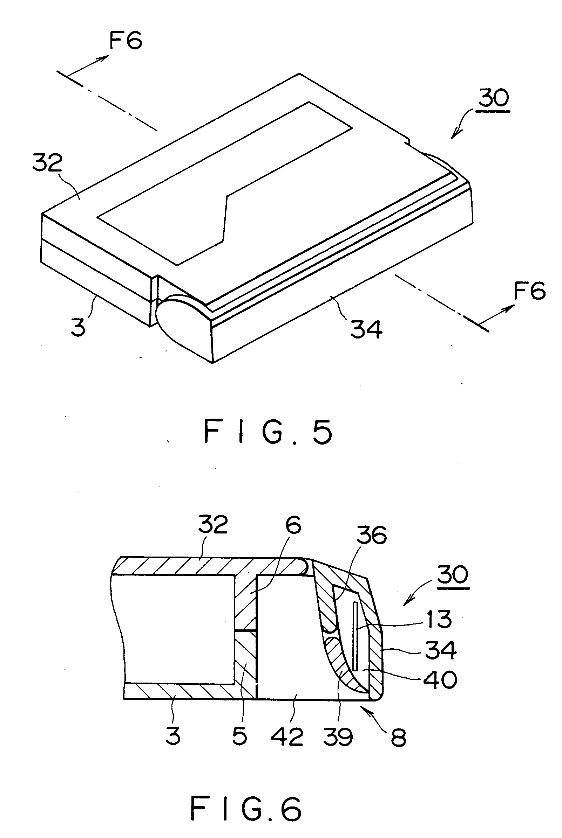

Referring to Figures 5, 6 and 7, in which parts corresponding to parts of the cassette of Figures 1 to 4 are indicated by the same reference numerals, a tape cassette 30 has an upper half 32 which effectively combines the conventional upper half 2 and an upper plate 20.

Thus, as shown in Figure 6, a plate forming the upper surface of the upper half 32 extends to cover the upper portion of the front opening 8.

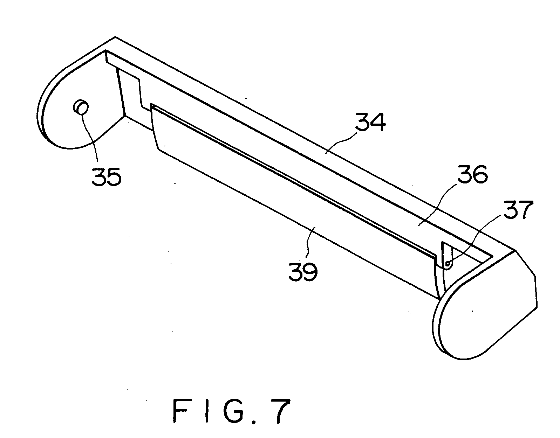

As shown in Figure 7, a front closure 34 is substantially U-shaped similarly to the conventional front closure 15, and is pivotally supported on the cassette housing on pins 35 formed at inner sides of opposite ends thereof.

The front closure 4 has a generally U-shaped cross-section with an integrally formed inner plate 36 extending downwardly. A rear closure 39 is pivotally supported in pin holes 37 formed in opposite ends of the inner plate 36, and the rear closure 39 is thereby mounted to be rotatable about the pin holes 37.

The rear closure 39 is formed to extend to adjacent the lower edge of the front closure 34 from the inner plate 36, and the front closure 34 and the rear closure 39 thereby define a tape chamber 40 of substantially the same shape as the conventional chamber for protection of the tape 13.

Moreover, the rear closure 39 is guided by guide grooves formed in inner surfaces 8A and 8B of the cassette housing forming the front opening 8 for pivotal movement when the front closure 34 is upwardly turned. The tape 13 can thus be exposed by turning the front closure 34 upwardly.

By separately forming the rear closure 39 and the upper closure, the rear closure 39 may thus be formed to extend from the inner plate 36, and accordingly a mouse area 42 is formed which is large compared to the conventional one due to elimination of the supporting portion of the upper closure.

Thus, it is possible positively to load the tape by effectively avoiding any accidental contact with loading guides.

Furthermore, the loading mechanism of the video tape recorder may be simplified to some extent if the mouse area 42 is enlarged.

Moreover, it is possible to optimize conditions of the load mechanism and the tape running system.

In the above description, it is stated that loading is carried out by drawing out the magnetic tape from the tape cassette. The invention is, however, not limited to a tape cassette in which the tape is drawn out for loading but is applicable to other kinds of tape cassettes.

The invention is also not limited to magnetic tape cassettes but can be applied to cassette tapes having tape-shaped optical recording media accommodated in them.

## Claims

1. A tape cassette (30) comprising
a cassette housing having an upper half (32) and a lower half (3),
tape reels accommodated in the cassette housing,
a tape (13) wrapped around the tape reels,
a front opening (8) at the front of the cassette housing with the tape (13) extending across the front opening (8),
a front closure (34) which in a closed position closes the front opening (8) and includes a U-shaped cross-section to cover the tape (13) extending across the front opening (8) from the front and above, the U-shaped cross-section comprising an outer portion which covers the whole of the front of the tape and an inner plate (36) which covers an upper part of a rear face of the tape (13), and
a rear closure (39) pivotably mounted on the inner plate (36) and in a closed position covering the remainder of the rear of the tape (13) extending across the front opening (13) so that the tape (13) extending across the front opening (8) is protected by the front closure (34) and the rear closure (39),
characterised in that a wall forming an upper surface of the upper half (32) extends over the front opening (8) towards the front closure (34) to cover the upper portion of the front opening (8), the rear closure (39) is pivotally mounted on pins (35) formed at opposite ends of the inner plate (36), and extends in the closed position only from the lower edge of the inner plate (36) to the lower edge of the outer portion of the U-shaped cross-section front closure (34), and
a mouse area is defined by wall surfaces of the cassette housing at the sides of the front opening (8), the inner plate (36), the rear closure (39) and the wall forming an upper surface of the upper half (32).

2. A cassette tape according to claim 1, in which the rear closure (39) is guided to be rotated by guide grooves formed in inner surfaces (8A, 8B) of portions of the cassette housing defining the front opening (8).

## Patentansprüche

1. Bandkassette (30) mit
- einem Kassettengehäuse mit einer oberen Hälfte (32) und einer unteren Hälfte (3),
- Bandspulen, die im Kassettengehäuse untergebracht sind,
- einem Band (13), das auf den Bandspulen aufgewickelt ist,
- einer vorderen Öffnung (8) an der Vorderseite des Kassettengehäuses, wobei sich das Band (13) über diese vordere Öffnung (8) erstreckt,
- einer vorderen Abdeckung (34), die in Schließstellung die vordere Öffnung (8) schließt und ein U-förmiges Profilteil zum Abdecken des sich über die vordere Öffnung (8) erstreckenden Bands (13) von vorn und von oben umfaßt, wobei das U-förmige Profilteil einen äußeren Teil, der die ganze Vorderseite des Bands abdeckt, und eine innere Platte (36), die den oberen Teil der Rückseite des Bands (13) abdeckt, umfaßt,
- einer an der inneren Platte (36) schwenkbar angebrachten hinteren Abdeckung (39), die in Schließstellung den übrigen Teil der Rückseite des sich über die vordere Öffnung (8) erstreckenden Bands (13) abdeckt, so daß das sich über die vordere Öffnung (8) erstrekkende Band (13) durch die vordere Abdeckung (34) und die hintere Abdeckung (39) geschützt ist,
dadurch gekennzeichnet,
daß eine Wand, die die Oberseite der oberen Hälfte (32) bildet, über der vorderen Öffnung (8) zur vorderen Abdeckung (34) ragt und somit die vordere Öffnung (8) von oben abdeckt, daß die hintere Abdeckung (39) auf Stiften (35), die an gegenüberliegenden Enden der inneren Platte (36) gebildet sind, schwenkbar angebracht ist und sich in Schließstellung nur vom unteren Rand der inneren Platte (36) zum unteren Rand des äußeren Teils des U-förmigen Profilteils der vorderen Abdeckung (34) erstreckt, und daß durch Wandflächen des Kassettengehäuses an den Seiten der vorderen Öffnung (8), durch die innere Platte (36), durch die hintere Abdeckung (39) und durch die Wand, die die Oberseite der oberen Hälfte (32) bildet, ein Einführbereich gebildet wird.

2. Bandkassette nach Anspruch 1, bei der die hintere Abdeckung (39) durch Führungsrillen, die an Innenflächen von Teilen des Kassettengehäuses, die die vordere Öffnung (8) bilden, gebildet sind, so geführt wird, daß sie geschwenkt wird.

## Revendications

1. Cassette de bande (30) comprenant :
- un boîtier de cassette possédant une moitié supérieure (32) et une moitié inférieure (3),
- des bobines de bande logées dans le boîtier de cassette,
- une bande (13) enroulée autour des bobines de bande,
- une ouverture frontale (8) au front du boîtier de cassette, la bande (13) s'étendant à travers l'ouverture frontale (8),
- un capot frontal (34) qui referme l'ouverture frontale (8) dans une position fermée et qui présente une section transversale en forme de U afin de couvrir la bande (13) qui s'étend à travers l'ouverture frontale (8) depuis le devant et depuis le dessus, la section transversale en forme de U comprenant une partie extérieure qui couvre la totalité du devant de la bande, et une plaque intérieure (36) qui couvre une partie supérieure d'une face arrière de la bande (13), et
- un capot arrière (39) monté en pivotement sur la plaque intérieure (36), et couvrant dans une position fermée le reste de l'arrière de la bande (13) qui s'étend à travers l'ouverture frontale (13), de sorte que la bande (13) qui s'étend à travers l'ouverture frontale (8) est protégée par le capot frontal (34) et par le capot arrière (39),
caractérisée en ce qu'une paroi qui forme une surface supérieure de la moitié supérieure (32) s'étend par dessus l'ouverture frontale (8) en direction du capot frontal (34) pour couvrir la partie supérieure de l'ouverture frontale (8), en ce que le capot arrière (39) est monté en pivotement sur des broches (35) formées à des extrémités opposées de la plaque intérieure (36), et s'étend dans la position fermée uniquement depuis le bord inférieur de la plaque intérieure (36) jusqu'au bord inférieur de la partie extérieure du capot frontal (34) à section transversale en forme de U, et en ce que
- une zone d'embouchure est définie par des surfaces de paroi du boîtier de cassette sur les côtés de l'ouverture frontale (8), de la plaque intérieure (36), du capot arrière (39), et la paroi formant une surface supérieure de la moitié supérieure (32).

2. Cassette de bande selon la revendication 1, dans laquelle le capot arrière (39) est guidé de manière à être mis en rotation par des gorges de guidage formées dans des surfaces intérieures (8a, 8b) de parties du boîtier de cassette qui définissent l'ouverture frontale (8).
